# EUROPÄISCHE PATENTSCHRIFT

(11) **EP 3 026 655 B1**
(45) Veröffentlichungstag und Bekanntmachung des Hinweises auf die Patenterteilung: **04.10.2017**
(21) Anmeldenummer: 15196260.2
(22) Anmeldetag: 25.11.2015
(51) Int. Cl.: H04N 7/18

(54) **VERFAHREN UND EINRICHTUNG ZUR ÜBERWACHUNG VON FAHRZEUGBILDGEBERN**
METHOD AND DEVICE FOR MONITORING VEHICLE IMAGE SENSORS
PROCÉDE ET DISPOSITIF DESTINÉS À LA SURVEILLANCE D'UN IMAGEUR DE VÉHICULE AUTOMOBILE

(30) Priorität: 26.11.2014 DE 102014117361
(43) Veröffentlichungstag der Anmeldung: 01.06.2016
(73) Patentinhaber: Dürrstein, Georg, 97486 Königsberg (DE)
(72) Erfinder: Dürrstein, Georg, 97486 Königsberg (DE)
(74) Vertreter: Götz, Georg Alois

(56) Entgegenhaltungen:
- EP-A1- 1 466 785
- EP-A1- 2 879 381
- IE-A1- 20 100 678
- US-A- 5 530 421

## Beschreibung

### Gebiet der Erfindung

Die Erfindung betrifft ein Verfahren zur Überwachung einer Fahrzeug-Sicherheitseinrichtung mit mindestens einem die Fahrzeug-Außenumgebung abbildenden Bildgeber wie z. B. einer Kamera, der mit einer, durch einen Fahrer und / oder einem Roboter wahrnehmbaren und / oder lesbaren, Schnittstelle, wie z. B. einem Bildschirm oder einem sonstigen Monitor, im Fahrzeug gekoppelt ist.

Die Erfindung betrifft außerdem eine Sicherheitseinrichtung für Fahrzeuge, einschließlich solcher mit Arbeitsgerätschaften beispielsweise für die Landwirtschaft, insbesondere zur Durchführung des vorher genannten Verfahrens, mit mindestens einem die Fahrzeug-Außenumgebung abbildenden Bildgeber, beispielsweise Kamera, der mit einer Schnittstelle, beispielsweise umfassend einen Bildschirm oder sonstigen Monitor, gekoppelt ist, welche durch einen Fahrer und / oder einen Roboter wahrnehmbar und / oder automatisch lesbar im oder am Fahrzeug angeordnet ist.

Aus dem Stand der Technik, beispielsweise der IE 20100678 A1, ist weiterhin eine Sicherheitseinrichtung für ein Fahrzeug bekannt, wobei die Einrichtung eine einfahrbare Stange zur Montage auf einem Fahrzeug, ein Warnsignal, das auf der Stange angeordnet ist, einen Regler mit einem Benutzeraktor, einen Antrieb, um die Stange durch Benutzersteuerung zwischen einer zurückgefahrenen Position und einer ausgefahrenen vorderen Position zu bewegen und mindestens zwei Kameras, die mit einer Anzeige für ein Fahrzeugführerhaus verbunden sind, einschließlich einer Kamera mit einem rechtsseitiges Sichtfeld und einer Kamera mit einem linksseitigen Sichtfeld, aufweist.

Insbesondere bei Fahrzeugen aus der Bau- und Landwirtschaft, die aufgrund ihrer Gestalt oder bei Anbau von Frontgeräten große Längen vorderhalb des Fahrzeugführerhauses erreichen, reduzieren derartige Sicherheitseinrichtung die Verkehrsumfallgefahr enorm. Bei unübersichtliche Einfahrten von Nebenstraßen oder Feldwegen in stark frequentierte Hauptstraßen kann der Fahrer, mithilfe der Kameras, Gefahrensituation am Monitor frühzeitig erkennen. Dies wird ermöglicht, indem die Kameras am vorderen Ende des Fahrzeuges oder Frontgerätes montierten werden.

Die im Stand der Technik gezeigten Sicherheitseinrichtungen bringen allerdings auch Nachteile mit sich. Durch Signalstörungen, beispielsweise verursacht durch elektromagnetische Wellen, kann es zu einem kurzeitigen Stillstand des Kamerabildes sowohl bei der digitalen als auch bei der analogen Bildübertragung auf dem Monitor kommen. Der Fahrer kann einen derartigen Fehler, wenn überhaupt, nur bei intensiver und längerer Betrachtung des Monitors erkennen. Beim kurzzeitigen Stehenbleiben oder während der Fahrt ist dies jedoch für den Fahrer nicht möglich. Auch beim Auftreten eines stillstehenden Bildes wird der Fahrer demzufolge nach dem Blick auf den Monitor in die Straße einbiegen, ohne zu wissen, ob er von rechter oder von linker Seite mit Gegenverkehr zu rechnen hat. Die bekannte Sicherheitseinrichtung ermöglicht dem Fahrer gegenwärtig nicht festzustellen, ob eine Fahrzeug- oder Gerätekamera ein aktuelles Bild an den Fahrer sendet oder nicht.

Aus der DE 20 2005 011 042 U1 ist eine Zugmaschine mit Anhänger und einem Umfeldüberwachungssystem bekannt, wobei das Umfeldüberwachungssystem mindestens zwei Kameras, welche im Heckbereich der Zugmaschine linksseitig und rechtsseitig installiert und auf den rückwärtigen Bereich der Zugmaschine ausgerichtet sind, und eine Anzeigevorrichtung, welche ein oder mehrere Anzeigeelemente beinhaltet, durch welche der von den Kameras aufgenommene Bereich angezeigt werden kann, und eine Steuereinheit, mittels derer Kameras und Anzeigevorrichtung steuerbar sind, enthält.

Die US 6 819 231 B2 offenbart eine Park- und / oder Maneuvrierassistenzvorrichtung für ein Personen- oder Nutzfahrzeug, welche eine Bilderfassungseinheit, wie z. B. eine Videokamera, und eine Grafikdisplayeinheit, mit welcher die von der Bilderfassungseinheit aufgenommenen Bildinformationen im Inneren des Fahrzeuges entweder mit oder ohne Bearbeitung abgebildet werden können, aufweist. Die Bilderfassungseinheit ist hinter einem schützenden Element derart angebracht, dass sie im Wesentlichen in einer Rastposition von außen unzugänglich ist, wobei das schützende Element eine zu der Bilderfassungseinheit zugehörige Öffnung aufweist.

Die DE 102010062 994 A1 betrifft ein Verfahren zur Ermittlung fahrzeugbezogener Daten, wobei Bilddaten mittels einer Rückkamera erfasst werden. Die Rückkamera ist hierbei in eine rückwärtige Umgebung eines Ego-Fahrzeugs ausgerichtet. Aus den Bilddaten werden durch Verarbeitung mindestens eines Bildes der Rückkamera oder einer Bildsequenz der Rückkamera die fahrzeugbezogenen Daten ermittelt. Die Erfindung betrifft ferner eine Vorrichtung zur Ermittlung fahrzeugbezogener Daten mit einer Rückkamera. Diese ist zur rückwärtigen Befestigung an einem Fahrzeug vorgesehen. Die Vorrichtung umfasst ferner eine Bildverarbeitungseinrichtung, vorzugsweise eine programmierbare Bildverarbeitungseinrichtung, die mit der Rückkamera verbunden ist, um von dieser mindestens ein Bild oder eine Bildsequenz zu empfangen. Die Bildverarbeitungseinrichtung ist zur Ausführung des erfindungsgemäßen Verfahrens ausgebildet.

Die US 2013/0088596 A1 offenbart einen Bildvergleichsbereich in einem Überwachungssystem der aktuelle Bilddaten mit vergangenen Bilddaten vergleicht, welche in mindestens einem vorherigen Zyklus erfasst wurden, wenn ein Fahrzeug in Bewegung gesetzt wird auf der Basis eines Ausgabesignaleingangs von einem Bewegungsmessbereich. Basierend auf dem Vergleichsergebnis bestimmt der Bildvergleichsbereich, ob die Kamera oder ein Bildverarbeitungsbereich abgestürzt ist oder nicht. Falls ein Fehler vorliegt gibt der Bildvergleichsbereich ein Ausgabesignal ab und meldet den Fehler an die Bildverarbeitung. Bei Empfang des Ausgabesignals führt der Bildverarbeitungsbereich im Fall eines Fehlers die Bildverarbeitung durch und übermittelt die Fehlerinformationen während er die Fehlerinformation einem Bildsignal überlagert, damit eine Displayeinheit in ein monochromes oder ein Alarmdisplay geändert werden kann.

Aus der JP 2010140171 A ist ein Scheinwerfersystem bekannt, das einen Beleuchtungslichtfluss eines Scheinwerfers von einer Fernlicht-Lichtverteilung zu einer Abblendlicht-Lichtverteilung umschaltet, wenn ein entgegenkommendes Fahrzeug aus den Frontbilddaten, welche durch eine Kamera aufgenommen wurden, erfasst wird. Dieses beinhaltet eine Beleuchtungsstärkeerfassungseinrichtung, die die Beleuchtungsstärke auf dem eigenen Fahrzeug erfasst, eine Straßenlichtbestimmungseinrichtung, welche die Annäherung des eigenen Fahrzeugs an einem Straßenlicht auf der Grundlage der Beleuchtungsstärke detektiert, ein Pixeländerungsdetektionsmittel, welches den Pixelwert in einem vorbestimmten Bereich der Bilddaten detektiert, welche im Zeitbereich bei dem Detektieren der Annäherung an das Straßenlicht aufgenommen werden und eine Kameraausfallerfassungseinrichtung, die den Ausfall der Kamera erkennt, wenn die Änderungsmenge beim Passieren eines Straßenlichts unter einem ersten Schwellenwert ist.

Die US 2013/0088596 A1 offenbart eine Bildüberwachungsvorrichtung, welche eine Bilderfassungseinheit, eine Bildverarbeitungseinheit und eine Bestimmungseinheit aufweist. Die Bilderfassungseinheit erfasst kontinuierlich ein peripheres Bild. Die Bilderfassungseinheit überlagert ein sich periodisch veränderndes Signal auf eine vorherbestimmte Position des peripheren Bildes. Die Bildverarbeitungseinheit bearbeitet das periphere Bild, welches mit dem Signal überlagert wurde mit einer vorbestimmten Bildverarbeitung. Die Bestimmungseinheit bestimmt einen Fehler der Bildverarbeitungseinheit basierend auf einer An- oder Abwesenheit einer periodischen Veränderung in dem überlagerten Signal auf dem peripheren Bild mit der vorbestimmten Bildverarbeitung. Die Bildüberwachungsvorrichtung sieht hierbei ausschließlich eine Fehlererkennung bei der Bilderfassungseinheit und der Bildverarbeitungseinheit vor.

Aus der US 5530421 ist eine Schaltung bekannt, welche unter anderem mehrere Kameras zur Fahrzeugüberwachung, einen Bildschirm zur Wiedergabe der durch die Kameras aufgenommenen Bilder, Betätigungselemente für Fahrtrichtungsanzeiger und eine Gangschaltung miteinander funktionstechnisch verknüpft. Diese Schaltung ermöglicht, dass durch Betätigung von Fahrzeugbedienelementen, wie zum Beispiel eines Schalthebels zum Einlegen des Rückwärtsganges oder eines Hebels zur Betätigung des rechten Blinklichtes, automatisch diejenige Kamera ihr Bild auf den Bildschirm überträgt, deren Sichtbereich für die Überwachung der Fahrzeugsicherheit im gegenwärtigen Moment am sicherheitsrelevantesten ist.

Die Druckschrift EP 1466785 A1 offenbart für ein Fahrzeug einen Fahrtrichtungsanzeiger, welcher an der Seite der Oberfläche der Fahrzeugkarosserie angeordnet ist, ein Bildgebungsmittel, welches empfindlich gegenüber Infrarotlicht reagiert und den Seitenbereich des Fahrzeuges abbildet und eine Abbildungseinheit, welche das aufgenommen Bild des Bildgebungsmittels abbildet. Das blinkende Licht des Fahrtrichtungsanzeigers wird im aufgenommen Bild miterfasst wobei ein Reduktionsprozess des Infrarotlichtes des Blinklichtes durchgeführt wird, sodass das aufgenommene Bild, insbesondere bei Nacht, nicht durch den Blinker gestört wird.

Es ist die Aufgabe der Erfindung, die Nachteile aus dem Stand der Technik zu eliminieren und eine Adaption zu finden, die eine kostengünstige, fehlerarme und modulare Bauweise zulässt. Zur Lösung der Erfindungsaufgabe werden, das im Anspruch 1 angegebene Verfahren, sowie die im Anspruch 2 angegebene Sicherheitseinrichtung vorgeschlagen.

### Offenbarung der Erfindung

Bei einem gattungsgemäßen Verfahren zur Überwachung einer Fahrzeug-Sicherheitseinrichtung wird diese Aufgabe erfindungsgemäß gelöst, indem ein Bildgeber, beispielsweise in Form einer Kamera, an seinem Eingang ständig und / oder wiederholt nach einem dem Fahrer und / oder Roboter vorbekannten Muster oder Schema unter Verwendung einer Stimuli für den Bildgeber generierenden Blinkleuchte oder sonstigen blinkenden Lichtquelle, welche am und / oder im Fahrzeug und /oder an und / oder in mindestens einer Arbeitsgerätschaft angeordnet ist und funktionsunabhängig vom Bildgeber arbeitet über die Schnittstelle wahrnehmbar oder lesbar stimuliert oder beeinflusst wird. Durch dieses Verfahren wird eine Lösung aufgezeigt, wie der Fahrer zuverlässig und schnell aufgrund einer kurzen Betrachtung des Monitors überprüfen kann, ob die Bildübertragung eines Bildgebers aktuell ist oder nicht. Eine Störung des Bildgebers führt daher nicht zwangsläufig zu einer Störung des Stimulationsgebers. Die Blinkleuchte oder blinkende Lichtquelle stellen zusätzliche, im fehlerfreien Fall redundante Sicherheitsmittel dar, die nur bei Ausfall des Bildgebers respektive Kamera oder eines sonstigen Glied in der Bildübertragungskette benötigt werden. Die Funktionsunabhängigkeit des Stimulationsgebers vom Bildgeber führt zu einer wesentlichen Steigerung der Zuverlässigkeit des Verfahrens und somit zu einer Erhöhung der Verkehrssicherheit.

Bei einer erfindungsgemäßen Sicherheitseinrichtung für Fahrzeuge steht der Bildgeber eingangsseitig mit einem nach vorbestimmten Muster arbeitenden Stimulationsgeber, beispielsweise einer Blinkleuchte oder sonstigen blinkenden Lichtquelle, in Wirkungsverbindung, der zur ständigen und / oder wiederholten Beeinflussung des Bildgebers, über die Schnittstelle für den Fahrer wahrnehmbar und / oder auslesbar, beispielsweise auch durch Automaten oder Roboter, ausgebildet sind, wobei die Blinkleuchte oder Lichtquelle in oder am Fahrzeug und / oder in oder an der Arbeitsgerätschaft angeordnet sind. Die Sicherheitseinrichtung verhindert somit ein unbemerktes Ausfallen des Bildgebers.

Vorteilhafte optionale Ausführungsformen sind in den Unteransprüchen beansprucht und werden nachfolgend näher erläutert.

Zweckmäßigerweise ist es von Vorteil, wenn der Bildgeber von einem Gehäuse umgeben ist, welches mindestens eine bewegliche oder verstellbare Verschlusseinrichtung zum Öffnen und Schließen des Gehäuses zwecks eingangsseitiger, optischer Kopplung des Bildgebers mit der Fahrzeug-Außenumgebung aufweist, wobei der Stimulationsgeber, bzw. die Lichtquelle oder Blinkleuchte außerhalb des Gehäuses oder an dessen Außenseite, dort beispielsweise an einer Öffnungskante, angebracht sind. Das Gehäuse schützt den Bildgeber vor Beschädigung von außen in Form von Schmutz, Nässe oder Schlägen. Es kann beispielsweise aus einem Vierkantrohr erzeugt worden sein, an dessen offenen Seiten etwaige Objektive des Bildgebers angeordnet sind.

Bei der erfindungsgemäßen Sicherheitseinrichtung ist der Bildgeber von einem Gehäuse umgeben, welches mindestens eine bewegliche oder verstellbare Verschlusseinrichtung zum Öffnen und Schließen des Gehäuses zwecks Abbildung einer Fahrzeug-Außenumgebung durch den Bildgeber aufweist. Dabei ist der Stimulationsgeber, die Lichtquelle oder die Blinkleuchte im Gehäuse mit untergebracht und dort in unmittelbarer Nachbarschaft zur Verschlusseinrichtung und / oder zu einer Gehäuseöffnung angeordnet. Dadurch wird neben dem Bildgeber auch der Stimulationsgeber vor Beschädigung von außen in Form von Schmutz, Nässe oder Schlägen geschützt. Ferner führt eine derartige Anordnung zu einer vereinfachten Montage und Demontage der Sicherheitseinrichtung, da der Stimulationsgeber nicht gesondert von dem Bildgeber mit Gehäuse an- bzw.-abgebaut werden muss.

Ein weiteres vorteilhaftes Ausführungsbeispiel ist dadurch gekennzeichnet, dass die Verschlusseinrichtung wenigstens eine auf- und zumachbare Verschließklappe aufweist und der Stimulationsgeber in unmittelbarer Nachbarschaft zur Innenseite der in geschlossener Stellung oder an der Innenseite der in geschlossener Stellung befindlichen Verschließklappe angeordnet ist. Diese Verschließklappe kann beispielsweise als Klappdeckel mit Scharniergelenk oder als Schiebedeckel ausgeführt sein. Dadurch ist es möglich den Bildgeber im ausgeschalteten Zustand zu verschließen.

Der Stimulationsgeber kann derart gegenüber dem Bildgeber angeordnet sein, dass der Stimulationsgeber im oberen Rand des Bildschirms sichtbar ist. Der blinkende Stimulationsgeber ist demnach zusammen mit der Verschließklappe am Bildschirm zu sehen, ohne Zuviel des Sichtfeldes des Bildgebers abzudecken.

Für die Erfindung ist von Vorteil, wenn der Stimulationsgeber mit der Verschlusseinrichtung derart gekoppelt oder andersartig verbunden ist, dass mit Verstellung oder Betätigung der Verschlusseinrichtung der Stimulationsgeber ein- oder ausschaltbar ist. Dadurch wird auf unnötiges Stimulieren verzichtet und Energie eingespart.

Vorzugsweise kann als Bildgeber eine digitale oder analoge Kamera zum Einsatz kommen. Die Verbindung zur Steuerung des Bildgebers kann mit oder ohne Kabel erfolgen. Die Sicherheitseinrichtung ist demnach für unterschiedlichste Kameraausführungen verwendbar.

Es ist möglich, dass der Bildgeber ein Nachtsichtgerät ist. Beispielsweise können für den Einsatz der Sicherheitseinrichtung Restlichtverstärker oder Wärmebildkameras als Bildgeber verwendet werden, was zu einer Erhöhung des Einsatzspektrums der Sicherheitseinrichtung führt.

Ein Ausführungsform sieht vor, dass der Stimulationsgeber eine blinkende Leuchtvorrichtung ist, welche das eingangsseitige Sichtfeld des Bildgebers abwechselnd erhellt und / oder abdunkelt. Dabei ist es unerheblich, ob die Blinkleuchte im Sichtfeld des Bildgebers angeordnet ist oder außerhalb. Das Erhellen und bzw. oder Abdunkeln des Sichtfelds des Bildgeber kann beispielsweise auf den Monitor zur Wiedergabe eines Bilds mit periodischer Hell- / Dunkeltastung führen. Der Fahrer kann bei einem kurzen Blick auf den Monitorbildschirm sofort erkennen, ob das Bild wie spezifiziert hell und dunkel wird. Ein planmäßig sich veränderndes Bild zeigt dem Fahrer an, dass das aktuelle Bild des Bildgebers störungsfrei übertragen wird. Ändert sich der Bildschirm des Monitors nicht, erkennt der Fahrer umgehend, dass die Bildübertragung nicht funktioniert.

Die Sicherheitseinrichtung sieht vor, dass der Bildgeber vom Fahrzeugführer in seiner Fahrerkabine ein- und ausschaltbar ist. Beim Einschalten des Bildgebers öffnen sich die Verschließklappen des Gehäuses. Zeitgleich, mit der Übertragung des Bildes und des Öffnens der Verschließklappen, beginnt der Stimulationsgeber mit der Stimulation. Schaltet der Fahrer den Bildgeber wieder aus, schließen sich die Verschließklappen und der Stimulationsgeber beendet die Stimulation.

Vorzugsweise wird die Sicherheitseinrichtung von der Fahrerkabine aus ein- und ausgeschaltet. Dies kann beispielsweise durch einen Schalter oder Hebel an einem Monitor oder an einer Schaltbox erfolgen. Auch ein Schalter, welcher an einem multifunktionellen Bedienhebel integriert ist, kann Verwendung finden. Multifunktionelle Bedienhebel kommen beispielsweise zur Steuerung von Getrieben in Traktoren zum Einsatz. Das Einschalten der Sicherheitseinrichtung kann auch über einen Blinkerhebel erfolgen, wie sie beispielsweise an Lenkrädern angebracht sind. Wird der Blinker z. B. in Fahrtrichtung rechts aktiviert, öffnet sich die rechte Verschließklappe der Sicherheitseinrichtung, der rechte Stimulationsgeber schaltet sich ein und der rechte Bildgeber beginnt mit der Übertragung. Zusätzlich erfolgt das Blinken des Blinklichts des Fahrzeugs. Die Kopplung der Funktionen der Sicherheitseinrichtung und des Blinkers kann bis zum Erreichen einer bestimmten Geschwindigkeit eingeschränkt sein, sodass beispielsweise nur beim Anfahren die beiden Funktionen gekoppelt sind.

Im Gehäuse des Bildgebers ist ein Aktuator z.B. in Form eines Spindelmotors eingebaut, der die linke und die rechte Verschließklappe öffnet, sobald die Bildgeber eingeschaltet werden. Diese Verschließklappen, welche beispielsweise an der oberen Kante des Gehäuses angehängt werden, werden mit einem im Gehäuse liegenden elektrischen Aktuator durch Drücken nach oben geöffnet und durch Ziehen wieder Staub und Wasserdicht geschlossen. Die Position der Bildgeber im Gehäuse kann verstellbar sein. So ist es möglich, das Sichtfeld der Bildgeber zu verschieben. Dies erfolgt beispielsweise über ein elektrisch steuerbares Gelenk, welches an den Bildgebern angebracht ist. So ist es dem Fahrer möglich das Sichtfeld der Bildgeber vom Fahrerhaus aus zu verändern. Ferner ist auch der Einsatz von Bildgebern mit verstellbarer Bildvergrößerung möglich.

Zusätzlich können das Gehäuse sowie die Verschließklappen über einen Heizkörper, angebracht im Inneren oder Äußeren des Gehäuses, beheizbar sein. Dies garantiert die Einsatzfähigkeit der Sicherheitseinrichtung auch bei starker Kälte.

Die Verschließklappen sowie das Gehäuse sind wasser- und staubdicht. Dies erfolgt, indem an den Kanten der Verschließkappen und den Kanten des Gehäuses Dichtungswerkstoffe angebracht sind, beispielsweise in Form eines Türgummis wie sie in der Automobilindustrie beim Abdichten von Autotüren zum Einsatz kommen. Auch der Einsatz von O-Dichtungsringen ist möglich.

Der Monitor in der Fahrerkabine kann vorzugsweise mindestens zwei Bildgeber gleichzeitig abbilden. Je nach Anzahl der Bildgeber im Gehäuse sind weniger oder mehr Abbildungen möglich. Die Widergabe der Bilder kann auch über einen Monitor oder Universalbildschirm erfolgen, der primär andere Funktionen erfüllt. Beispielsweise kann es sich hierbei um ein globales Positionsbestimmungssystem GPS handeln. Sobald der Fahrer die Sicherheitseinrichtung einschaltet, werden automatisch beide Klappen geöffnet und die beiden Kameras der Frontkamera als Splitscreen auf dem Monitor angezeigt. Sobald die Frontkameras ausgeschaltet werden, schließen sich automatisch die beiden Klappen, um die Kameras vor Verschmutzung zu schützen. Der Monitor schaltet anschließend auf seine voreingestellte Funktion zurück. Ebenso kann die voreingestellte Funktion das übertragen des Bildes einer Rückfahrkamera sein.

Die Sicherheitseinrichtung kann auf nahezu jeder Stelle eines Gerätes oder Fahrzeuges fixiert werden. Beispielsweise kann dies über einen Magnet erfolgen, welcher am Gehäuse der Sicherheitseinrichtung angebracht ist. Mögliche Anbaupositionen umfassen z. B. das Obere eines Traktorfrontgewichtes und die Ober- oder Vorderseite von Anbaugeräten.

Es ist möglich, die Sicherheitseinrichtung in all ihren Ausführungsformen in die Karosserie eines Fahrzeuges oder Gerätes einzubauen. Beispielsweise kann bei einem PKW der Einbau der Bildgeber links und rechts im Bereich der Stoßstange erfolgen. Ferner ist es möglich die Bildgeber durch eine Flüssigkeit zu reinigen. In diesem Ausführungsbeispiel können die Verschließklappen durchsichtig sein. Dies erfolgt ähnlich einer Hochdruckwaschdüse, wie sie gegenwärtig zur Reinigung von Scheinwerfern bei PKWs zum Einsatz kommen. Sobald das Licht eingeschaltet ist und die Scheibenwaschanlage betätigt wird, fährt eine Waschdüse vor dem Scheinwerfer aus der Karosserie heraus und reinigt mit dem Hochdruckwasserstrahl die Scheinwerfer. Auf dieselbe Art kann eine Reinigung der Bildgeber durchgeführt werden.

Alle für den Einsatz erforderlichen Leitungen und Kabel können in einem Sammelkabel zusammengefasst werden. Dieses Kabel erstreckt sich von der Schnittstelle bis zum Gehäuse der Sicherheitseinrichtung. Vorzugsweise ist das Kabel zweigeteilt. Die Teilung des Kabels erfolgt über einen Stecker. Der erste Teilungsabschnitt erstreckt sich vom Gehäuse der Sicherheitseinrichtung bis zu dem Stecker. Des Weiteren kann das Kabel des ersten Abschnitts als dehnbares Spiralkabel ausgeführt sein. Der zweite Abschnitt erstreckt sich vom Stecker bis zur Schnittstelle. Front- und Heckanbaugeräte für die Land,- Forst- oder Kommunalwirtschaft weisen oftmals unterschiedliche Längen auf. Damit das Kabel bei kürzeren Längen von Anbaugeräten nicht nach unten hängt und in die Arbeitsmaschinen hineingezogen werden kann, ist der erste Abschnitt des Kabels dehnbar.

Die in dem Gehäuse der Sicherheitseinrichtung eingebauten Bildgeber können auch in ihrem eigenen Gehäuse oder in ihrer eigenen Verschalung den Stimulationsgeber aufweisen. Bespielweise kann eine blinkende Lichtquelle vorderhalb des Objektivs des Bildgebers in seinem Gehäuse angeordnet sein.

Eine weitere Ausführungform sieht vor, dass die Stimulation des Bildgebers von den Fahrzeugrichtungsanzeigern übernommen wird. Als Fahrzeugrichtungsanzeiger werden in diesem Zusammenhang die Blinklichter eines Fahrzeuges, Anhängers oder Anbaugerätes verstanden, welche i. d. R. serienmäßige Bestandteile der Fahrzeugbeleuchtung sind. In dieser Ausführungform entfallen die eigenen Stimulationsgeber der Sicherheitseinrichtung. Das Sichtfeld des Bildgebers kann demnach in einem Bereich sein, welcher von den Fahrzeugrichtungsanzeigern erhellt wird.

Die Erfindung wird nachfolgend mithilfe einer Zeichnung näher erläutert, in welcher ein erstes Ausführungsbeispiel, dargestellt ist. Es zeigen:
Fig. 1 eine perspektivische Darstellung einer ersten Ausführungsform einer Sicherheitseinrichtung, und
Fig. 2 eine Seitenansicht eines landwirtschaftlichen Nutzfahrzeuges mit angebauter Sicherheitseinrichtung

Die Figuren sind lediglich schematischer Natur und dienen nur dem Verständnis der Erfindung. Die gleichen Elemente sind mit denselben Bezugszeichen versehen.

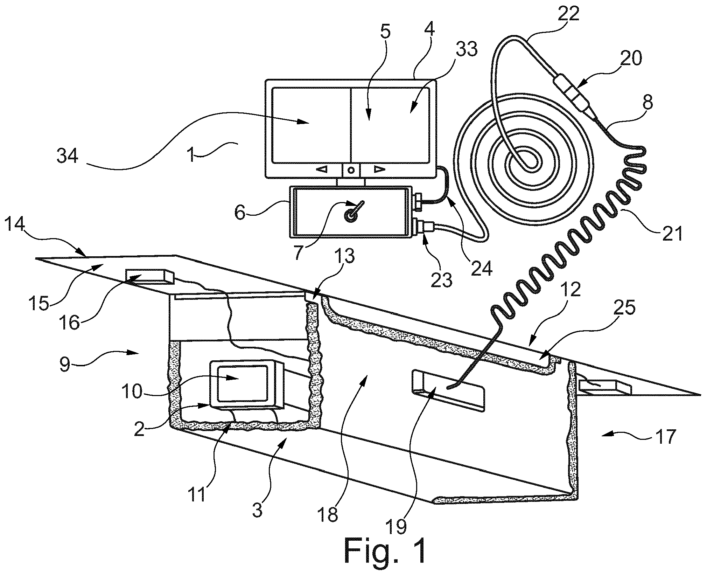

In Fig. 1 ist eine erste Ausführungsform einer Sicherheitseinrichtung 1 dargestellt. Diese zeigt einen Bildgeber 2 in einem Gehäuse 3, eine Schnittstelle 4 mit einem Bildschirm 5, ein Bedienelement 6 mit einem Schalthebel 7 sowie ein Kabel 8. Der Bildschirm 5 unterteilt sich in zwei Bildschirmhälften, eine rechte Bildschirmhälfte 33 und eine linke Bildschirmhälfte 34, welche die jeweiligen rechten und linken Fahrzeugaußenumgebungen abbilden. Das Gehäuse 3, welches den Bildgeber 2 umgibt weist die Form eines Vierkantrohres auf. Dieses Vierkantrohr besteht aus vier gleichen, rechteckigen Flächen. An der offenen Vorderseite 9 des Gehäuses 3 zeigt ein Objektiv 10 des Bildgebers 2 aus dem Gehäuse 3. Die Kanten der offenen Vorderseite 9 des Gehäuses 10 weisen Gummidichtungen 11 auf. An der vorderen Kante einer Deckfläche 12 des Vierkantrohres ist ein Scharniergelenk 13 befestigt. An dem Scharniergelenk 13 ist eine Verschließklappe 14 angebracht. Die Verschließklappe 14 weist eine Fläche auf, die zum Verschließen der gesamten offenen Vorderseite 9 ausgelegt ist. Die Verschließklappe 14 ist um 90° gegenüber der offenen Vorderseite 9 geöffnet. An einer Klappeninnenfläche 15 der Verschließklappe 14 ist ein Stimulationsgeber 16 in Form einer Blinkleuchte angebracht. Eine Hinterseite 17 des Gehäuses 3 weist die gleichen Merkmale wie die Vorderseite 9 auf. In der Mitte einer Seitenfläche 18 ist ein erster Stecker 19 eingesteckt. Das Kabel 8 wird durch einen zweiten Stecker 20 in einen ersten Kabelabschnitt 21 und einen zweiten Kabelabschnitt 22 zweigeteilt. Der erste Kabelabschnitt 21 erstreckt sich von dem ersten Stecker 19 bis zu dem zweiten Stecker 20. Der erste Kabelabschnitt 21 ist Spiralförmig, wohingegen der zweite Kabelabschnitt 22 keine Windungen aufweist. Der zweite Kabelabschnitt erstreckt sich von dem zweiten Stecker 20 bis zu einem Stecker 23, welcher an das Bedienelement 6 angesteckt ist. Das Bedienelement 6 mit dem Schalthebel 7 ist über ein Kabel 24 mit der Schnittstelle 4 verbunden. Die Schnittstelle 4 ist als Monitor mit dem zweigeteilten Bildschirm 5 dargestellt. Die Deckfläche 12 des Gehäuses 3 ist in einem Teilbereich 25 abnehmbar. Die Kanten dieses Teilbereiches 25 weisen dieselbe Gummidichtung 11 wie die Kanten der Vorderseite 9 und Hinterseite 17 auf.

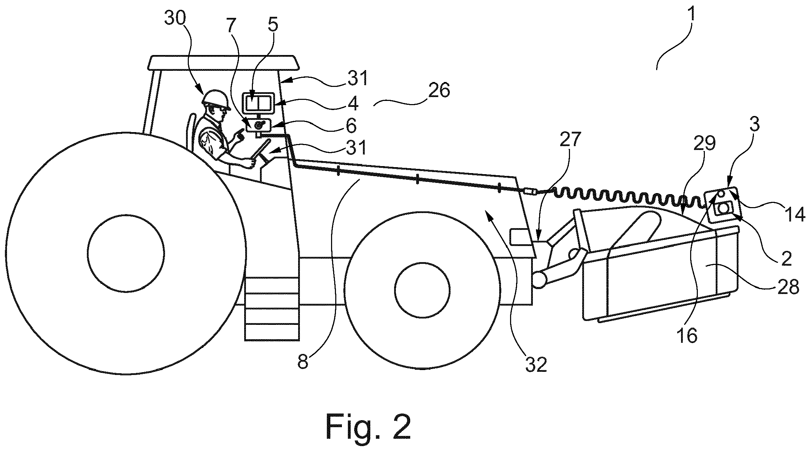

Fig. 2 zeigt einer Seitenansicht eines Fahrzeugs 26 in Form eines landwirtschaftlichen Schleppers. An einem Vorderende 27 des Fahrzeugs 26 ist eine Arbeitsgerät 28 in Form eines Mähwerks angebracht. Auf einer Oberfläche 29 des Arbeitsgeräts 28 ist die Sicherheitseinrichtung 1 angebracht. Die Verschließklappen 14 des Gehäuses 3 sind geöffnet, sodass der Bildgeber 2 zu sehen ist. Ebenso ist der Stimulationsgeber 16 oberhalb des Bildgebers 2 sichtbar. Das Fahrzeug 26 wird von einem Fahrer 30 gesteuert. In einer Fahrerkabine 31 ist seitlich oberhalb eines Lenkrads 32 im Sichtfeld des Fahrers 30 die Schnittstellte 4 mit dem Bedienelement 6 der Sicherheitseinrichtung 1 angebracht. Der Fahrer 30 aktiviert den Schalthebel 7 mit seiner linken Hand und betrachtet den zweigeteilten Bildschirm 5. Das Bedienelement 6 ist über das zweiteilige Kabel 8 mit dem Gehäuse 3 verbunden. Der zweite Kabelabschnitt 22 ist fest entlang einer Motorhaube 32 des Fahrzeugs 26 gefügt. Am Ende des zweiten Kabelabschnitts 22 ist der erste Stecker 20 im Bereich der Vorderseite 27 angeordnet. Der erste Kabelabschnitt 21 erstreckt sich vom ersten Stecker 20 über das Arbeitsgerät 28 bis hin zum zweiten Stecker 19, welcher den ersten Kabelabschnitt 21 des zweiteiligen Kabels 8 mit dem Gehäuse 3 der Sicherheitseinrichtung 1 verbindet.

### Bezugszeichenliste als Teil der Offenbarung

- 1: Sicherheitseinrichtung
- 2: Bildgeber
- 3: Gehäuse
- 4: Schnittstelle
- 5: Bildschirm
- 6: Bedienelement
- 7: Schalthebel
- 8: Kabel
- 9: Vorderseite
- 10: Objektiv
- 11: Gummidichtung
- 12: Deckfläche
- 13: Scharniergelenk
- 14: Verschließklappe
- 15: Klappeninnenfläche
- 16: Stimulationsgeber
- 17: Hinterseite
- 18: Seitenfläche
- 19: Erster Stecker
- 20: Zweiter Stecker
- 21: Erster Kabelabschnitt
- 22: Zweiter Kabelabschnitt
- 23: Stecker
- 24: Kabel
- 25: Teilbereich
- 26: Fahrzeug
- 27: Vorderende
- 28: Arbeitsgerät
- 29: Oberfläche
- 30: Fahrer
- 31: Fahrerkabine
- 32: Motorhaube
- 33: rechte Bildschirmhälfte
- 34: linke Bildschirmhälfte

## Patentansprüche

1. Verfahren zur Überwachung einer Fahrzeug-Sicherheitseinrichtung (1) mit mindestens einem die Fahrzeug-Außenumgebung abbildenden Bildgeber (2), , der mit einer durch einen Fahrer (30) oder Roboter wahrnehmbaren oder lesbaren Schnittstelle (4), , im Fahrzeug (26) gekoppelt ist, **dadurch gekennzeichnet, dass** der Bildgeber (2) an seinem Eingang ständig und/oder wiederholt nach einem dem Fahrer (30) oder Roboter vorbekannten Muster oder Schema unter Verwendung einer Stimuli für den Bildgeber (2) generierenden Blinkleuchte (16) oder sonstigen blinkenden Lichtquelle, welche am oder im Fahrzeug oder an oder in mindestens einer Arbeitsgerätschaft fixiert oder angeordnet ist und funktionsunabhängig vom Bildgeber arbeitet, über die Schnittstelle (4) wahrnehmbar oder lesbar, stimuliert oder beeinflusst wird.

2. Sicherheitseinrichtung (1) für Fahrzeuge (26), einschließlich solcher mit Arbeitsgerätschaften (28), , insbesondere zur Durchführung des Verfahrens nach Anspruch 1, mit mindestens einem die Fahrzeug-Außenumgebung abbildenden Bildgeber (2), der mit einer Schnittstelle (4), gekoppelt ist, welche durch einen Fahrer (30) oder Roboter wahrnehmbar oder auch automatisch lesbar im oder am Fahrzeug (26) angeordnet ist, **dadurch gekennzeichnet, dass** der Bildgeber (2) eingangsseitig mit einer nach vorbestimmtem Muster arbeitenden Blinkleuchte (16) oder sonstigen blinkende Lichtquelle in Wirkungsverbindung steht, die zur ständigen oder wiederholten Beeinflussung des Bildgebers (2), über die Schnittstelle (4) für den Fahrer (30) wahrnehmbar oder auslesbar, ausgebildet ist, wobei die Blinkleuchte (16) oder Lichtquelle im oder am Fahrzeug oder in oder an der Arbeitsgerätschaft als zusätzliches, im fehlerfreien Fall redundantes Sicherheitsmittel¹ angeordnet ist.

3. Sicherheitseinrichtung (1) nach Anspruch 2 , wobei der Bildgeber (2) von einem Gehäuse (3) umgeben ist, welches mindestens eine bewegliche oder eine verstellbare Verschlusseinrichtung zum Öffnen und Schließen des Gehäuses (3) zwecks eingangsseitiger Kopplung des Bildgebers (2) mit der Außenumgebung und/oder zwecks Abbildung einer Fahrzeug-Außenumgebung durch den Bildgeber (2) aufweist, **dadurch gekennzeichnet, dass** die Blinkleuchte (16) oder Lichtquelle außerhalb des Gehäuse (3) angeordnet oder an dessen Außenseite, angebracht ist.

4. Sicherheitseinrichtung (1) nach Anspruch 2 , wobei der Bildgeber (2) von einem Gehäuse (3) umgeben ist, welches mindestens eine bewegliche oder verstellbare Verschlusseinrichtung zum Öffnen und Schließen des Gehäuses (3) zwecks eingangsseitiger Kopplung des Bildgebers (2) mit der Außenumgebung oder zwecks Abbildung einer Fahrzeug-Außenumgebung durch den Bildgeber (2) aufweist, **dadurch gekennzeichnet, dass** die Blinkleuchte (16) oder die Lichtquelle im Gehäuse (3) mit untergebracht und dort in unmittelbarer Nachbarschaft zur Verschlusseinrichtung und/oder zu einer Gehäuseöffnung angeordnet ist.

5. Sicherheitseinrichtung (1) nach Anspruch 4, **dadurch gekennzeichnet, dass** die Verschlusseinrichtung (1) wenigstens eine auf- und zumachbare Verschließklappe (14) aufweist, und die Blinkleuchte (16) in unmittelbarer Nachbarschaft zur Innenseite oder an der Innenseite der in geschlossener Stellung befindlichen Verschließklappe (12) angeordnet ist.

6. Sicherheitseinrichtung (1) nach Anspruch 5, **dadurch gekennzeichnet, dass** die Blinkleuchte (16) oder Lichtquelle derart gegenüber dem Bildgeber (2) angeordnet ist, dass die Blinkleuchte (16) oder Lichtquelle im obere Rand eines mit der Schnittstelle (4) verbundenen oder integrierten Bildschirms (5) sichtbar ist.

7. Sicherheitseinrichtung (1) nach einem der Ansprüche 2 - 6, **dadurch gekennzeichnet, dass** die Blinkleuchte (16) oder Lichtquelle mit der Verschlusseinrichtung derart gekoppelt oder sonst verbunden ist, dass mit Verstellung oder Betätigung der Verschlusseinrichtung die Blinkleuchte (16) oder Lichtquelle ein- oder ausschaltbar ist.

8. Sicherheitseinrichtung (1) nach einem der Ansprüche 2-7, **dadurch gekennzeichnet, dass** der Bildgeber (2) ein Nachtsichtgerät ist.

9. Sicherheitseinrichtung (1) nach einem der Ansprüche 2 - 8, **dadurch gekennzeichnet, dass** die Blinkleuchte (16) oder Lichtquelle derart eingerichtet ist, dass sie das eingangsseitige Sichtfeld des Bildgebers (2) ganz oder teilweise abwechselnd erhellt oder abdunkelt.

10. Sicherheitseinrichtung (1) nach einem der Ansprüche 2 - 9 , **dadurch gekennzeichnet, dass** nach oder mit dem Betätigen eines mit einer Steuerung für die Sicherheitseinrichtung (1) verbundenen Bedienelementes (6) der Bildgeber (2) oder die Blinkleuchte (16) oder Lichtquelle sowie die Verschließklappen (14) zeitgleich aktivierbar oder betätigbar sind.

11. Sicherheitseinrichtung (1) nach Anspruch 10, **dadurch gekennzeichnet, dass** das Bedienelement (6) an einem Blinkerhebel im Bereich eines Fahrzeuglenkrades angeordnet ist oder die Sicherheitseinrichtung (1) durch Betätigen des Blinkerhebels automatisch aktivierbar ist.

12. Sicherheitseinrichtung (1) nach einem der Ansprüche 2 - 11, **dadurch gekennzeichnet, dass** ein von der Schnittstelle (4) umfasster Monitor dazu ausgebildet und/oder eingerichtet ist, die Sichtfelder von mindestens zwei Bildgebern gleichzeitig abzubilden.

13. Sicherheitseinrichtung (1) nach einem der Ansprüche 2 - 12 **dadurch gekennzeichnet, dass** der Bildgeber (2) oder die Blinkleuchte (16) oder Lichtquelle in einer Fahrzeug- oder Gerätekarosserie eingebaut sind.

14. Sicherheitseinrichtung (1) nach einem der Ansprüche 2,4 -13 , **dadurch gekennzeichnet, dass** der Stimulationsgeber (16) im Bildgebergehäuse angeordnet ist.

## Claims

1. A method of monitoring a vehicle safety device (1) comprising at least one image sensor (2) that images the external area surrounding the vehicle, which image sensor is coupled with an interface (4) that can be seen or read by a driver (30) or a robot in the vehicle (26), **characterised in that** the image sensor (2), at its input, is constantly and/or repeatedly seen or read, stimulated or influenced via the interface (4) according to a pattern or scheme previously known to the driver (30) or robot using a flashing light (16) or some other flashing light source that generates stimuli for the image sensor (2) which is fixed or disposed on or in the vehicle or on or in at least one piece of working equipment.

2. A safety device (1) for vehicles (26), including those with pieces of working equipment (28), in particular for implementing the method according to Claim 1, comprising at least one image sensor (2) that images the external area surrounding the vehicle, which image sensor is coupled with an interface (4) that can be seen or also automatically read by a driver (30) or a robot in or on the vehicle (26), **characterised in that** the image sensor (2) is operatively connected on the input side to a flashing light (16) or some other flashing light source that works according to a pre-determined pattern which, designed for constantly or repeatedly influencing the image sensor (2), can be seen or read out by the driver (30) via the interface (4), the flashing light (16) or the light source being disposed in or on the vehicle or in or on the working piece of equipment as an additional safety means¹ which is redundant in the event of there being no faults.

3. The safety device (1) according to Claim 2, the image sensor (2) being surrounded by a housing (3) which has at least one moveable or one adjustable closure device for opening and closing the housing (3) for the purpose of coupling the image sensor (2) on the input side with the external surrounding area and/or for the purpose of imaging the external area surrounding the vehicle by means of the image sensor (2), **characterised in that** the flashing light (16) or the light source is disposed outside of the housing (3) or is attached to its outside.

4. The safety device (1) according to Claim 2, the image sensor (2) being surrounded by a housing (3) which has at least one moveable or adjustable closure device for opening and closing the housing (3) for the purpose of coupling the image sensor (2) on the input side with the external surrounding area or for the purpose of imaging the external area surrounding the vehicle by means of the image sensor (2), **characterised in that** the flashing light (16) or the light source is also accommodated within the housing (3) and is disposed here in the immediate vicinity of the closure device and/or of a housing opening.

5. The safety device (1) according to Claim 4, **characterised in that** the closure device (1) has at least one closure flap (14) that can be opened and closed, and the flashing light (16) is disposed in the immediate vicinity of the inside or on the inside of the closure flap (12) that is in the closed position.

6. The safety device (1) according to Claim 5, **characterised in that** the flashing light (16) or the light source is disposed opposite the image sensor (2) such that the flashing light (16) or the light source is visible in the upper edge of a screen (5) connected to or integrated into the interface (4).

7. The safety device (1) according to any of Claims 2 - 6, **characterised in that** the flashing light (16) or the light source is coupled with the closure device or is connected to it in some other way such that the flashing light (16) or the light source can be switched on or off by adjustment or actuation of the closure device.

8. The safety device (1) according to any of Claims 2 - 7, **characterised in that** the image sensor (2) is a night vision device.

9. The safety device (1) according to any of Claims 2 - 8, **characterised in that** the flashing light (16) or the light source is set up so that it totally or partially alternately lightens or darkens the input-side field of vision of the image sensor (2).

10. The safety device (1) according to any of Claims 2 - 9, **characterised in that** the image sensor (2) or the flashing light (16) or the light source as well as the closure flaps (14) can be activated or actuated simultaneously after or upon actuation of a control element (6) connected to a control system for the safety device (1).

11. The safety device (1) according to Claim 10, **characterised in that** the control element (6) is disposed on a direction-indicator control in the region of a vehicle steering wheel or the safety device (1) can be activated automatically by actuating the direction-indicator control.

12. The safety device (1) according to any of Claims 2 - 11, **characterised in that** a monitor included in the interface (4) is designed or set up to simultaneously image the fields of vision of at least two image sensors.

13. The safety device (1) according to any of Claims 2 - 12, **characterised in that** the image sensor (2) or the flashing light (16) or the light source is built into the body of a vehicle or device.

14. The safety device (1) according to any of Claims 2, 4 - 13, **characterised in that** the stimulation sensor (16) is disposed in the image sensor housing.

## Revendications

1. Procédé pour surveiller un dispositif de sécurité (1) de véhicule, comprenant au moins un capteur d'image (2) qui cartographie l'environnement extérieur du véhicule, qui est couplé dans le véhicule (26) avec une interface (4) perceptible ou lisible par un conducteur (30) ou par un robot, **caractérisé en ce que** le capteur d'image (2) est stimulé ou influencé à son entrée, en continu et/ou de façon répétitive selon un motif ou un agencement qui est connu du conducteur (30) ou du robot et perceptible ou lisible par l'intermédiaire de l'interface (4), par l'utilisation d'un feu clignotant (16) ou autre source de lumière clignotante qui génère un stimulus pour le capteur d'image (2) et qui est fixé ou disposé sur ou dans le véhicule ou sur ou dans au moins un équipement de travail et qui fonctionne de façon indépendante du capteur d'image.

2. Dispositif de sécurité (1) pour véhicules (26), y compris ceux ayant des équipements de travail (28), en particulier pour la mise en oeuvre du procédé selon la revendication 1, ayant au moins un capteur d'image (2) agencé dans ou sur le véhicule (26), qui cartographie l'environnement extérieur du véhicule, qui est couplé avec une interface (4) perceptible ou également lisible de façon automatique par un conducteur (30) ou par un robot, **caractérisé en ce que** le capteur d'image (2) est connecté de façon opérationnelle selon son entrée à un feu clignotant (16) ou autre source de lumière clignotante qui fonctionne selon un motif prédéterminé et qui est utilisé pour influencer le capteur d'image (2) de façon constante ou répétitive, et est perceptible ou lisible par le conducteur (30) par l'intermédiaire de l'interface (4), dans lequel le feu clignotant (16) ou autre source de lumière est disposé dans ou sur le véhicule ou dans ou sur l'équipement de travail en tant que moyen de sécurité supplémentaire redondant en cas de problème.

3. Dispositif de sécurité (1) selon la revendication 2, dans lequel le capteur d'image (2) est entouré par un boîtier (3) qui a au moins un dispositif de verrouillage déplaçable ou ajustable pour ouvrir et fermer le boîtier (3) dans le but de coupler le capteur d'image (2) avec l'environnement extérieur et/ou dans le but de cartographier l'environnement extérieur du véhicule au moyen du capteur d'image (2), **caractérisé en ce que** le feu clignotant (16) ou autre source de lumière est disposé à l'extérieur du boîtier (3) ou rapporté sur son côté extérieur.

4. Dispositif de sécurité (1) selon la revendication 2, dans lequel le capteur d'image (2) est entouré par un boîtier (3) comprenant au moins un dispositif de fermeture mobile ou réglable pour ouvrir ou fermer le boîtier (3) dans le but de coupler selon son entrée le capteur d'image (2) avec l'environnement extérieur ou dans le but de cartographier l'environnement extérieur du véhicule au moyen du capteur d'image (2), **caractérisé en ce que** le feu clignotant (16) ou source de lumière est disposé dans le boîtier (3) et à proximité immédiate du dispositif de fermeture et/ou d'une ouverture du boîtier.

5. Dispositif de sécurité (1) selon la revendication 4, **caractérisé en ce que** le dispositif de fermeture (1) comprend au moins un volet de fermeture (14) qui peut être ouvert et fermé, et le feu clignotant (16) est disposé à proximité immédiate du côté intérieur ou sur le côté intérieur du volet de fermeture (12) qui est dans la position fermée.

6. Dispositif de sécurité (1) selon la revendication 5, **caractérisé en ce que** le feu clignotant (16) ou source de lumière est disposé à l'opposé du capteur d'image (2) de telle façon que le feu clignotant (16) ou source de lumière est visible dans le bord supérieur d'un écran (5) relié avec ou intégré dans l'interface (4).

7. Dispositif de sécurité (1) selon l'une quelconque des revendications 2 à 6, **caractérisé en ce que** le feu clignotant (16) ou source de lumière est couplé ou connecté autrement au dispositif de fermeture de telle façon que le feu clignotant (16) ou source de lumière puisse être commuté en fonctionnement ou hors fonctionnement par l'ajustement ou l'actionnement du dispositif de fermeture.

8. Dispositif de sécurité (1) selon l'une quelconque des revendications 2 à 7, **caractérisé en ce que** le capteur d'image (2) est un dispositif de vision nocturne.

9. Dispositif de sécurité (1) selon l'une quelconque des revendications 2 à 8, **caractérisé en ce que** le feu clignotant (16) ou source de lumière est disposé de telle façon qu'il illumine ou assombrit totalement ou partiellement de façon alternée le champ visuel d'entrée du capteur d'image (2).

10. Dispositif de sécurité (1) selon l'une quelconque des revendications 2 à 9, **caractérisé en ce que** le capteur d'image (2) ou le feu clignotant (16) ou source de lumière ainsi que le volet de fermeture (14) peuvent être actionnés après ou simultanément avec l'actionnement d'un élément d'actionnement (6) connecté à une commande pour le dispositif de sécurité (1).

11. Dispositif de sécurité (1) selon la revendication 10, **caractérisé en ce que** l'élément d'actionnement (6) est disposé sur un levier de clignotant dans la zone du volant de direction d'un véhicule, ou le dispositif de sécurité (1) peut être activé de façon automatique par l'actionnement du levier de clignotant.

12. Dispositif de sécurité (1) selon l'une quelconque des revendications 2 à 11, **caractérisé en ce qu'**un moniteur, constitué par l'interface (4), est conçu et/ou adapté pour acquérir simultanément l'image des champs de vue d'au moins deux capteurs d'image.

13. Dispositif de sécurité (1) selon l'une quelconque des revendications 2 à 12, **caractérisé en ce que** le capteur d'image (2) ou le feu clignotant (16) ou source de lumière sont installés dans un corps de dispositif ou de véhicule.

14. Dispositif de sécurité (1) selon l'une quelconque des revendications 2, et 4 à 13, **caractérisé en ce que** le générateur de stimulation (16) est logé dans le boîtier du capteur d'image.
